(19)

Europäisches
Patentamt
European
Patent Office
Office européen
des brevets

(11)     **EP 2 834 275 B1**

(12)     **EUROPEAN PATENT SPECIFICATION**

(45) Date of publication and mention
of the grant of the patent:
**30.05.2018  Bulletin 2018/22**

(21) Application number: **13772103.1**

(22) Date of filing: **04.04.2013**

(51) Int Cl.:
**C08B 1/08** (2006.01)      **C08B 11/12** (2006.01)

(86) International application number:
**PCT/IB2013/052691**

(87) International publication number:
**WO 2013/150475 (10.10.2013 Gazette 2013/41)**

(54) **METHOD FOR THE PREPARATION OF CELLULOSE ETHERS WITH A HIGH SOLIDS PROCESS, PRODUCT OBTAINED AND USES OF THE PRODUCT**

VERFAHREN ZUR HERSTELLUNG VON CELLULOSEETHERN IN EINEM VERFAHREN MIT HOHEM FESTKÖRPERANTEIL, IN DIESEM VERFAHREN HERGESTELLTES PRODUKT UND VERWENDUNGEN DIESES PRODUKTS

PROCÉDÉ DE PRÉPARATION D'ÉTHERS DE CELLULOSE À L'AIDE D'UN PROCÉDÉ FAISANT APPEL À UNE TENEUR DE SOLIDES ÉLEVÉE, PRODUIT AINSI OBTENU ET SES UTILISATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2012  US 201261620744 P**

(43) Date of publication of application:
**11.02.2015  Bulletin 2015/07**

(73) Proprietor: **Stora Enso Oyj**
**00101 Helsinki (FI)**

(72) Inventors:
• **SAXELL, Heidi**
**01360 Vantaa (FI)**
• **HEISKANEN, Isto**
**55100 Imatra (FI)**
• **AXRUP, Lars**
**663 41 Hammarö (SE)**
• **LAND HENDSDAL, Cecilia**
**66731 Forshaga (SE)**
• **JOKELA, Veikko**
**55300 Rauha (FI)**

(74) Representative: **Steinrud, Henrik et al**
**Stora Enso AB**
**Group Intellectual Property**
**Box 9090**
**65009 Karlstad (SE)**

(56) References cited:
**EP-A1- 1 676 864          EP-A1- 1 803 737**
**EP-A2- 0 292 242          WO-A1-2009/070168**
**WO-A2-00/47628          GB-A- 976 335**
**GB-A- 1 066 588          US-A- 1 858 017**
**US-A- 1 858 017          US-A- 2 510 355**
**US-A- 2 619 483          US-A- 2 619 483**
**US-A- 2 680 737          US-A- 2 982 765**
**US-A- 3 857 833          US-A- 4 254 258**
**US-A1- 2004 158 057     US-A1- 2004 158 057**

• **KLEMM, D. ET AL.: 'Nanocelluloses: a new family of nature- based materials' ANGEW. CHEM. INT. ED. vol. 50, 2011, pages 5438 - 5466, XP055167698**
• **ALINCE, B.: 'POROSITY OF SWOLLEN SOLVENT- EXCHANGED CELLULOSE AND ITS COLLAPSE DURING FINAL LIQUID REMOVAL' COLLOID AND POLYMER SCIENCE vol. 253, 1975, pages 720 - 729, XP055167701**
• **HASANI, M. ET AL.: 'Self-crosslinking of 2-hydroxypropyl-N- methylmorpholinium chloride cellulose fibres' CELLULOSE vol. 18, 2011, pages 575 - 583, XP019899113**

## Description

### Field of the Invention

The present invention is related to a process that enables the production of alkali cellulose in a water based (free of organic solvents) process as an intermediate and further etherification of the cellulosic material to produce cellulose derivatives, especially cellulose ethers. The cellulose ethers that can be made from the alkali cellulose include, but are not restricted to/inter alia, carboxymethyl cellulose (CMC), carboxyethyl cellulose (CEC), methyl cellulose (MC), ethyl cellulose (EC), hydroxyl ethyl cellulose (HEC), ethyl hydroxyl ethyl cellulose (EHEC), hydroxyl propyl cellulose (HPC).

The etherified cellulosic material, for example carboxymethyl cellulose and especially the corresponding sodium salt, herein after CMC, can be further used as raw material in a process for microfibrillated or nanofibrillated cellulosic material (MFC or NFC, respectively) as well as in other applications, wherein the use of CMC is beneficial for achieving certain product properties, most often rheological properties.

### Technical background of the invention

The carboxymethyl cellulose sodium salt, CMC, is the most widely applicable cellulose ether and it has also been produced in the largest quantity among water soluble cellulose derivatives. CMC has traditionally been used for example as thickener or dispersant in several different fields such as paper applications, detergents, personal care, pharmaceutics, food and cosmetics applications as well as in oil drilling muds.

The properties of cellulose derivatives are affected by degree of substitution (DS), distribution of substituents (in the case of CMC, carboxymethyl groups), degree of polymerization (DP) of the cellulose backbone and molecular mass distribution. Cellulose ethers are industrially being produced in heterogeneous reactions where solid alkali swollen cellulose are treated with etherification reagents in organic solvent medium. The alkali treatment, mercerization, is known to be a prerequisite for the etherification reaction. Thus, as well as the etherification, also the mercerization conditions affect all of the above mentioned characteristics (DS, distribution of substituents and also to some extent DP of the cellulose backbone) and thus it can be said that the mercerization step is in key role regarding production and properties of cellulose ethers.

The industrial production methods for cellulose ethers, such as CMC, use dried and milled cellulose as starting material and the production lines are not integrated to pulp mills. One of the main reasons is that etherification reactions are condensation reactions and the presence of water in the reaction generally causes low reaction efficiency by consuming reagents to form by products. This is why the etherification reactions of cellulose are generally prepared in organic solvent medium with low water content [1].

CMC is generally considered to be water soluble when the degree of substitution, DS, is above 0.6. When the DS of CMC is < 0.3 the fibrous characters of cellulose are retained and the produced CMC is non-water soluble. As indicated above, the solubility is however not solely determined by the average DS, but also the other polymer characteristics, distribution of substituents and degree of polymerization of the cellulose backbone, affect the solubility as well as rheological properties.

There has been an increasing interest towards non-water soluble CMC (DS<0.3) as it has been shown to have high potential as starting material for microfibrillated and nanofibrillated cellulose. The microfibrillation or more over nanofibrillation of cellulose is a costly process itself. The advantage of the use of carboxymethylated cellulose in MFC production comes from significantly lower energy consumption in the processing as well as improved properties in terms of strength, rheology and film forming properties [2]. Carboxymethylation would thus widen the end use application possibilities of MFC. Even though the evident technical and property advantages, so far the low DS (DS<0.3) CMC cost structure has not been on a reasonable level for commercial production of MFC or NFC through this route.

CMC is produced commercially in a two stage slurry process that starts with the mercerization stage, where the pulp is treated with alkali (NaOH) in a water/alcohol medium, followed by an etherification stage in which monochloro acetic acid (MCA) and/or it's sodium salt (NaMCA) is added to the pulp slurry. The chemical reactions related to the carboxymethylation process are presented in formulas 1 to 4. The formula (1) shows the formation of oxonium sodium hydroxide complex and water in between one cellulose hydroxyl group and the sodium cation. In case NaMCA is used as reactant, the reaction (2) does not occur (NaMCA is readily present), but if MCA is used as reagent, reaction (2) takes place. As MCA consumes part of the NaOH in the reaction medium, the amount of NaOH needs to naturally be adjusted according to the used etherification reagent. The carboxymethylation presented in formula (3) is a nucleophilic substitution of the oxonium sodium hydroxide completed with the alkyl halide, MCA. The etherification reaction (3) is competing with the side reaction (4) where sodium glycolate salt is produced. Reaction (3) can be generally applied by using alkyl halides with different size and structure.

Main reactions in CMC synthesis ("Cell" indicates cellulose)

Mercerization (formation of alkoxide)

(1)

$$Cell\text{-}OH + NaOH \rightarrow Cell\text{-}O\text{-}Na^+ + H_2O$$

Salt, NaMCA, formation (in case the use of MCA)
(2)

$$NaOH + ClCH_2COOH \rightarrow ClCH_2COO\text{-}Na^+ + H_2O$$

Etherification
(3)

$$Cell\text{-}O^-Na^+ + ClCH_2COO^-Na^+ \rightarrow Cell\text{-}O\text{-}CH_2COO^-Na^+ + Na^+Cl^-$$

Side reaction (most important) in CMC synthesis
(4) $2NaOH + ClCH_2COOH \rightarrow NaCl + HOCH_2COO^-Na^+ + H_2O$

In addition to the chemical reactions and steps presented above, the prior art production process of CMC involves also several other steps starting with (i) dry milling of cellulose, (ii) suspending the cellulose powder in organic solvent reaction media, (iii) mercerizing cellulose (iv) etherification with MCA and/or NaMCA, (v) neutralization and if needed, washing to remove by-products, and (vi) drying and granulation of end product.

The process starts with dry milling of pulp, which is energy consuming and bears also a prominent dust explosion risk. The following mercerization as well as etherification is carried out as slurry processes using organic solvent/water mixtures. Different solvents have been widely studied, the most common being alcohols like ethanol and 2-propanol. Also other solvents and solvent mixtures, such as ethanol and benzene as well as ethanol and acetone have been shown to be suitable for CMC synthesis [3]. The 2-propanol solvent system is perhaps most widely used and has also been studied most extensively [4]. In the slurry process the ratio of the cellulosic material to the solvents is so low, that the slurry can easily be stirred with efficient blade mixer and pumped with typical industrial pumps like centrifugal pumps provided with open impellers up to 13 to 15 w/w-% solid concentration. Further, the organic solvent content in the solvent/water mixture is typically high as it is beneficial for the reaction yield to have > 80 w-% of organic solvent in the medium. The need to recover high volumes of organic solvents at a CMC plant is evident and the highest investment costs in commercial CMC processes are related to the high use of organic solvents and the resulted need for handling and recovery of these flammable liquids.

After suspending the dry milled cellulose with the reaction solvent, the mercerization step begins with introducing NaOH-water solution to the mixture. The concentration of NaOH is typically around 45 to 50 w-%. It is well known and documented in several studies that in order to achieve even swelling of the fibre and later substitution in the etherification phase, the reaction medium needs to be cooled down in the mercerization step and for the best result (even mercerization) the temperature should preferably be below 20 °C. The time of which the reaction medium is kept at low temperatures is typically in between 30 and 120 minutes. In so called complete mercerization, the NaOH is penetrating the cellulose fibres and in case the concentration of the NaOH in the reaction medium is high enough (concentration depends of solvent medium, in case of pure water, the generally accepted minimum concentration of NaOH is above 8 w-% of the water phase), it can penetrate also the crystalline regions. The $Na^+$ ions are able to replace the cellulose hydroxyl hydrogen according to equation (1) and alkalized cellulose is formed. The formation of alkalized cellulose is a perquisite for the etherification reaction.

The next reaction step in the production of CMC is etherification which starts by the addition of the etherification reagent (MCA and/or its sodium salt NaMCA). The etherification reagent(s) are added typically as water solutions that can be around 70 to 80 w-%. After the addition of etherification reagent, the temperature is raised to the reaction temperature, which is typically 65 to 75 °C and where reaction (3) will occur. This temperature is held for 60 to 120 minutes. The side reaction (4) where sodium hydroxide and MCA react with each other producing NaCl and sodium glycolate affects the reaction efficiency (conversion rate of MCA to CMC).

The heating and reaction step is followed by neutralization step, where the possible left over NaOH or MCA is neutralized. In case of producing salt free CMC, high quality or so called pure grades, the next step is washing. The washing is carried out in alcohol-water mixtures to avoid dissolving CMC in water. The washing can be carried out typically in a belt filter, drum filter or press filter.

From washing, the wet CMC goes to drying phase, where the remaining alcohol solvents are removed with heat or steam. Before final drying the water containing product is typically granulated to give a product that is easily handled.

It is evident that the traditional CMC production route needs complicated expensive equipment as well as large investments and maintenance costs. The problem thus is how to simplify this process in order to reduce costs and increase safety and environmental impact are of high value. The problem is solved by the present invention as will be described and claimed below.

## Summary of the invention

The aim of this invention is to provide improved method for the preparation of cellulose ethers.

An aspect of this invention is a method for the preparation of cellulose ethers from moist, never dried, pulp substantially without any organic solvents, that is with at most very little organic solvents, at a high solid content. According to the invention the method comprises an alkali treatment (mercerization) and an etherification step, wherein the alkali treatment step is carried out with solid (80-99.5 w/w-%) granulated or milled sodium hydroxide (NaOH) substantially without use of organic solvents, and the material is mixed or otherwise worked (by mechanical means), either continuously or at (certain) time intervals, during the alkali treatment.

Further aspects of the invention are the use of material produced as described herein for the production of microfibrillated cellulose and nanofibrillated cellulose and the use of the material produced as herein described in paper applications, composites, washing powders, oil drilling muds, and certain food and cosmetics applications.

Still further aspect of the invention is a product obtained by the method as described herein.

## General description of the invention

The present invention relates to both the mercerization stage and the etherification stage of cellulose etherification process. The same reagents and reactions are used as in traditional CMC process. The differences from the traditional method are (I) the use of never dried pulp as raw material, (II) the addition of reactants partly or fully in solid form, and (III) the use of only small amounts of water as reaction medium.

The key difference compared to prior art methods is the lack of organic solvents as reaction medium and the use of high solids content. Only the reactants may be added as organic solvent solutions, thus bringing minor amounts of organic solvents to the process, but typically the addition of the reactants is done partially or, preferably, fully in solid form. There is then no free water or solvents present in mercerization or etherification stage but all water exists in the cellulose fibre walls or the fibres lumen.

In the event that organic solvent is present, this is preferably limited to a minor amount of alcohol used as a solvent for the etherification reagent. Preferably there is no organic solvent at all present at the alkali treatment step.

Never dried cellulose is more reactive than dried cellulose. In respect of never dried cellulose reference is made to the article Spinu et al, Cellulose, 2011, 18, 247-256 [5], Generally, never dried cellulose has the advantage of being very flexible and easily conformable as compared to dried cellulose, and in never-dried state cellulose, due to the opened structure, absorbs much more chemicals. Penetration of $Na^+$ ions into the fibre has been shown to be better for never dried pulp as compared to dried and re-wetted pulp, especially for never dried soft wood pulp [5]. Such an easy $Na^+$ ion penetration is a major advantage for mercerisation and following etherification according to the present invention.

The addition of solid NaOH in accordance with the invention makes it possible to limit the water addition. Moreover, it has been shown that the MFC made in accordance with the invention has improved product properties.

We have surprisingly found that by filtering and/or mechanically compressing and/or mixing never dried pulp together with NaOH, the cellulose can be mercerized and further etherified with a reasonable yield of conversion of MCA. This can be achieved by using a sufficiently high solid content of cellulose and the use of solid sodium hydroxide (NaOH) in the mercerization step and by adding optionally also the etherification reagent as solid powder (MCA or NaMCA) to the reaction medium.

According to the invention a method for the preparation of cellulose ethers from moist, never dried, pulp without any organic solvents or very little organic solvents (i.e. less than 20w/w%, preferably less than 5 w/w%) at high solid content with a process that comprises an alkali treatment (mercerization) and an etherification step, wherein the alkali treatment step is carried out with solid (80-99,5 w/w-%) granulated or milled sodium hydroxide (NaOH), by effectively mixing or working the material continuously or at time intervals during the alkali treatment.

Preferably the content of pulp is at the mercerization stage at least 20 w/w-% but less than 75 w/w-%, more preferably between 30 and 50 w/w-% and most preferably between 35 and 45 w/w-%.

If never dried pulp is mercerized in accordance with the invention, the solids content of the mercerized pulp is so high that it is economically feasible to transport/deliver the pulp to external customers as mercerized pulp. Moreover, the use of never dried pulp in the mercerization may improve the quality of the mercerized pulp (for example less hornification ext. in starting pulp - never dried pulp ext.). The invention has a great commercial value since the process gives rise to substantial cost savings and quality improvements.

As indicated before, the etherification reaction yield is determined by the water content. Thus it is beneficial to have as high solids content as possible in the etherification stage. The solids content should be in the range from 30 to 80 w/w-%, preferably between 40 and 60 w/w-%. This can be achieved by having high solids content already in the first mercerization stage. One option is to increase the solids content and the conversion rate of the reaction by drying the alkalized pulp after mercerization. This can be achieved either by introducing vacuum and heat to the alkali cellulose. The etherification reagent used in the method of the invention is preferably monochloro acetic acid (MCA) or its alkali salt, more preferably sodium monochloro acetic acid (NaMCA). The etherification reagent is preferably added as solid, even though it may be dissolved in either water or an alcohol or mixtures thereof. The etherification agent can be added before or at the same time with the alkalisation (mercerization) agent.

The reaction temperature in the etherification phase is preferably 60 to 120 °C, more preferably 90 to 100°C.

The reaction mixture is preferably subjected to grinding, shearing or other mechanical mixing during the etherification.

Organic solvents, preferably alcohols such as methanol, ethanol, n-propanol or 2-propanol, might however be used in small quantities for addition of the etherification reactant as a solute in the organic solvent, or in larger quantities in the post-reaction washing step where salts that are produced as side products are being washed of the desired product. The present invention simplifies the production process significantly and lowers both the investment and maintenance costs significantly.

In addition to the reaction yield and resulting degree of substitution, also the distribution of the substituents (in the case of carboxymethyl groups in case of CMC) plays a crucial role in product properties and performance. In high solids methods, the even distribution of substituents is especially challenging when compared to the competing slurry process.

The uneven distribution of substituents resulting from slow diffusion of the etherification agent in the alkalized pulp can be improved by introducing the etherification agent, in the case of CMC the MCA and or NaMCA, to the alkali pulp as an alcohol or alcohol water solution. The amount of the alcohol should not exceed 20 w/w-% or more preferably not exceed 5 w/w-% of the mass of the reaction mixture. The alcohol can be fully or partially evaporated and recovered in the etherification process.

Preferably the reaction medium contains no organic solvents at the alkali treatment (mercerization) step.

Preferably the mercerization step is followed by a concentration step for further increase the solids content after mercerization step to a solids content of 35 to 80 w-%, more preferably to 40 to 70 w-% and most preferably in between 50 and 60 w-% before or after the addition of the etherification reagent. Suitable concentration steps comprise evaporation of water in a reactor or a vacuum dryer or a similar apparatus. Cellulosic material in the method is never dried chemical pulp, which is obtained from pulping and used for the invention without intermediate drying.

Preferred NaOH granule diameter is < 5 mm, more preferably < 2 mm and most preferably < 1 mm.

Preferably the carboxymethylated product is washed with water (in case of DS < 0.3) or water/alcohol solutions (DS > 0.3) to remove sodium chloride and sodium glycolate from the product. Washing with methanol, ethanol or 2-propanol water solutions is most preferred.

The process according to the invention may be integrate with a pulp mill process, so that the never dried cellulosic material is obtained from said pulping process without intermediate drying or pulp dry grinding. The pulp from said pulp mill process may just be treated by filtration or by a screw press for removal of excess water and bringing the pulp to an advantageous high solids content.

There exist several different applications where total solubility of CMC is not needed or wished.

One obvious application is production of microfibrillated cellulose (MFC) and/or nanofibrillated cellulose (NFC). It has been shown that carboxymethylation can be a route to liberate microfibril aggregates. Thus even a low substituted CMC will improve microfibrillation and thus make production of MFC/NFC easier, consume less energy and improve MFC/NFC properties. Thus the use of material produced as described here, preferably according to the method of the invention for the production of microfibrillated cellulose and nanofibrillated cellulose is within the scope of this invention.

The CMC produced with the method of the invention can be used among others in enhancing the properties of paper and board, detergents, hygiene products, additives in food applications or as indicated above as pre-treatment in the production of microfibrillated cellulose. Thus also the use of the material produced as described here, preferably according to the method of the invention in paper applications, composites, washing powders, oil drilling muds, certain food and cosmetics applications is within the scope of the invention.

Some of the advantages of the invention are:

    1. Raw materials;

        a) Never dried pulp can be used which gives large cost savings in raw material.

        b) Essentially no organic solvents in the process; A water based process is more environmentally friendly, simplified, safer and cheaper than organic solvent recovery process. This lowers the production costs directly.

        c) In most cases; due to lower D.S. (thus essentially not dissolving in water), the end product can be washed with water instead of using organic solvents.

2. Process conditions and parameters can be changed for more optimal;

a) High investment costs and energy consuming pulp drying process step can be replaced by low investment and low energy demanding filtration and/or screw press, extruder or similar devices and production can be integrate to pulp mill production.

b) Energy consuming and dangerous dry grinding of pulp can be avoided resulting as cost savings and safety improvement.

c) Higher temperatures in etherification can be used in water based reactions in unpressurized reactors and the reaction yields can be improved.

d) In most cased (due to low D.S.) end product can be washed with water (no organic solvents needed).

3. Investment costs can be reduced dramatically

a) No pulp drying equipment investment, process can be integrated with pulp mill.

b) No pulp dry grinding systems needed.

c) No systems and recovery of organic solvents are needed.

d) End washing can be done with normal pulp washing systems used in pulp mill.

4. End product quality

a) Very high quality MFC/NFC can be produced from this way carboxymethylated fibers.

b) Much higher consistency of pulp can be used in homogenization introducing thus direct savings in MFC process.

The invention is illustrated by the following non-limiting examples. It should be understood that the embodiments given in the description above and the examples are for illustrative purposes only, and that various changes and modifications are possible

## Examples

Eight different experiments to produce carboxymethyl cellulose via mercerized cellulose are presented as Examples 1 to 8. The pulp for example 1 was dewatered under suction by using a Bühner funnel, whereas all the other pulps were dewatered and brought to high solids conditions by pressing. The used chemical amounts are given in table 1.

### Example 1.

One hundred gram (calculated as dry) of never dried pine pulp directly from the pulp mill was dewatered to give a solids content of 19.5 % and water content of 80.5 %. Powder like NaOH (29.6 g) was added to the pulp and the mixture was mixed mechanically with Kitchen aid for 30 minutes. The alkalized cellulose was left to stand at 2°C overnight. The mechanical mixing was continued and 33.4 ml of 80 w-% monochloroacetic acid solution was added within 10 minutes over stirring. Mixing was continued for further 30 minutes after which the material was placed in a sealed reactor in an oven at 105 °C for 120 minutes. The reactor was left to cool down. The carboxymethylated cellulose fibres were suspended in 2 l of water and the pH was adjusted with 35 w-% HCl to 7. The material was filtered of on a Bühner funnel and further washed three times with 3 l of cold water. The wet mass was used further for preparation of MFC with a Microfluidizer (Microfluidics Inc.). A small part of the sample was used to determine the DS with a titration method described by [Almlöf H, Extended mercerization prior to carboxymethyl cellulose preparation, PhD thesis, Karlstad University, 2010, ISBN 978-91-7063-314-0].

The DS value was determined as follows:

A 0.5 g sample of CMC, calculated as oven-dry product, was heated to 700°C for 15-20 min; the resulting ash was cooled in a glass desiccator containing silica gel as the drying agent. The ash was then dissolved in 6 ml boiling deionised water before being titrated with 0.1 M $H_2SO_4$ until the solution reached a pH of 4.4. The following equation was then used to calculate the DS value from the amount of titrated acid (b ml) and CMC (G g) used.

$$DS=0.162*(0.1*b/G)/(1-0.080*(0.01*b/G))$$

**Examples 2 to 5** were prepared according to Example 1, but with different reactant amounts that can be seen in Table 1.

**Example 6** was prepared similar to Example 1, but instead of adding the NaOH as solid, a 59.2 g of 50 w-% solution of NaOH was added in the mercerization stage dropwise during mixing with the dough mixer. After addition of the NaOH solution the experiment was continued similar to Example 1.

**Example 7** was prepared similar to Example 1, but instead of introducing MCA as 80 w-% water solution, the MCA was introduced drop wise as 50 w-% 2-propanol solution into the mixture. The chemical amounts are in Table 1. After the addition of the etherification reagent, the synthesis was continued similar to Example 1.

**Example 8** was prepared similar to Example 1, but instead of addition of 29.6 g of NaOH in the merserization stage, only 14.8 g of solid NaOH was added. Also the etherification reagent was introduced as solid in the form of NaMCA (43.1 g) slowly during mixing and no MCA was used in the reaction. The chemical amounts are listed in Table 1.

Table 1. Used mercerisation and carboxymethylation conditions. One hundred grams (when calculated as abs. dry) never dried softwood pulp was used in each experiment. Other chemical amounts and yields are summarized in the table.

| No | Pulp m [g] | NaOH [g] | NaOH 50 w-% [g] | MCA 80 w-% [ml] | MCA 50 w-% 2-propanol [g] | NaMCA m [g] | Water in mercerization calculated from the pulp w-% | $DS_{target}$ |
|---|---|---|---|---|---|---|---|---|
| 1 | 100.0 | 29.6 | - | 33.4 | - | - | 80 | 0.6 |
| 2 | 106.5 | 29.6 | - | 33.4 | - | - | 71 | 0.6 |
| 3 | 101.0 | 29.6 | - | 33.4 | - | - | 63 | 0.6 |
| 4 | 100.4 | 49.34 | - | 55.6 | - | - | 72 | 1.0 |
| 5 | 100.6 | 29.6 | - | 33.4 | - | - | 63 | 0.6 |
| 6 | 100.0 | - | 59.2 | 33.4 | - | - | 60 | 0.6 |
| 7 | 100.2 | 29.6 | - | - | 69.94 | | 63 | 0.6 |
| 8 | 100.1 | 14.8 | - | - | | 43.1 | 61 | 0.6 |

Table 2. Properties of the obtained carboxymethylated materials

| No | $DS_{target}$ | $DS_{result}$ | RE [%] | Micro fibrillation runnability | Microscopy |
|---|---|---|---|---|---|
| 1 | 0.6 | 0.05 | 8 | Bad | Long fibre residues |
| 2 | 0.6 | 0.12 | 20 | Bad+ | Long fibre residues |
| 3 | 0.6 | 0.17 | 28 | Good- | Long fibre residues |
| 4 | 1.0 | 0.21 | 21 | Good+ | Short fibre residues |
| 5 | 0.6 | 0.18 | 30 | Excellent | Few short thick fibre residues |
| 6 | 0.6 | 0.2 | 33 | Excellent | Long fibre residues |
| 7 | 0.6 | 0.19 | 32 | Excellent- | Long fibre residues |
| 8 | 0.6 | 0.18 | 30 | Excellent+ | Long fibre residues |

Before fluidization, dried carboxymethylated fibres showed extremely fast wetting (wetting immediately). This opens possibility for utilizing this property of these fibres as absorbent, viscosity adjustment in areas where the total solubility of the chemical is not wanted.

Light microscopy analysis was carried out by pressing a small sample (< 5 mg) of micro fibrillated carboxymethylated material on a glass slit and viewing the samples on a light microscope (Zeiss) with a 10 x magnification.

**References**

[1] A. Isogai in Wood and Cellulosic Chemistry, Chapt. 14. Chemical Modification of Cellulose, pages 599-625, edited by David N.-S. Hon and Nobua Shiraishi, Marcel Dekker Inc. 2001, ISBN0-8247-0024-4.

[2] D. Klemm et al., Angew. Chem. Int. Ed. 2011, 50, 5438-5466.

[3]

a) Olaru, N., Olaru, L., et al., Carboxymethylcellulose synthesis in organic media containing ethanol and/or acetone; Journal of Applied Polymer Science 1998, vol 67, issue 3, p. 481-486.

b) Olaru, N. and Olaru L., Influence of Benzene-Containing Reaction Media on Cellulose Reactivity in the Carboxymethylation Prosess; Ind. Eng. Chem. Res. 2004, 43, 5057-5062.

[4] Stigsson, V., Kloow, G., et al., The Influence of the solvent system used during manufacturing of CMC; Cellulose (2006) 13:705-712.

[5] Spinu, M., Dos Santos, N., Le Moigne, N., Navarad, P., How does the never-dried state influence the swelling and dissolution of cellulose fibres in aqueous solvent?, Cellulose, 2011, 18, 247-256.

[6] Hong T. L., Borrmeister B., Dautzenberg H., Phillipp B. Zur Ermittlung des Sustituionsgrases lösicher Carboxymethylccellulose durch Polyelektrolyttitration. Zellst. Und Pap. 1978. 207-210.

## Claims

1. A method for the preparation of cellulose ethers from moist, never dried pulp at a high solid content with a process that comprises an alkali treatment and an etherification step, by carrying out the alkali treatment with solid (80-99.5 w/w-%) granulated or milled sodium hydroxide (NaOH) substantially without use of any organic solvents, and mechanically working the material continuously or at time intervals during the alkali treatment wherein the content of the pulp at the alkali treatment step is over 20 w/w-% but less than 75 w/w-%.

2. The method of claim 1, wherein the content of the pulp at the alkali treatment step is in between 30 and 50 w/w-% and most preferably in between 35 and 45 w/w-%.

3. The method of claim 1 or 2, wherein monochloro acetic acid (MCA) or its alkali salt, preferably sodium monochloro acetic acid (NaMCA), is used as the etherification reagent and wherein the etherification reagent is added as solid or dissolved in either water or an alcohol or mixtures thereof.

4. The method of claim 3, wherein the etherification agent is added before or at the same time as the solid sodium hydroxide.

5. The method of any one of the preceding claims, wherein the reaction temperature at the etherification step is 60 to 120 °C, preferably 90 to 100°C.

6. The method of any one of the preceding claims, wherein the mixture is subjected to grinding, shearing or other mechanical mixing during the etherification.

7. The method of any one of the preceding claims, wherein the reaction medium contains no organic solvents at the alkali treatment and etherification steps.

8. The method of any one of the preceding claims, wherein the alkali treatment step is followed by a concentration step for further increasing the solids content after the alkali treatment step to a solids content of 35 to 80 w-%, preferably to 40 to 70 w-% and more preferably in between 50 and 60 w-%, before or after the addition of the etherification reagent.

9. The method of claim 1, wherein the never dried pulp is chemical pulp, recycled fibres, agro based fibres like straws, bagasse etc. cellulose pulp containing material.

10. The method of claim 1, wherein the NaOH granule diameter is < 5 mm, preferably < 2 mm and more preferably < 1 mm.

11. The method of any one of claims 1 to 4, wherein the carboxymethylated product is washed with water (in case of DS < 0,3) or water/alcohol solutions (DS > 0,3), preferably with methanol, ethanol or 2-propanol water solutions to remove sodium chloride and sodium glycolate from the product.

12. The method of any one of the preceding claims, which is integrated with a pulp mill process, the never dried pulp being obtained from said process without intermediate drying or pulp dry grinding.

13. The method of claim 12, wherein the pulp from said pulp mill process is treated by filtration or by a screw press.

**Patentansprüche**

1. Verfahren zur Herstellung von Zellulose-Ethern aus feuchtem, nie getrocknetem Zellstoff bei einem hohen Feststoffgehalt mit einem Prozess, der einen Alkalibehandlungs- und einen Veretherungsschritt umfasst, durch Durchführen der Alkalibehandlung mit festem (80 bis 99,5 Gewichtsprozent) granuliertem oder gemahlenem Natriumhydroxid (NaOH), im Wesentlichen ohne Verwendung irgendwelcher organischer Lösungsmittel, und mechanische Bearbeitung des Materials kontinuierlich oder in Zeitintervallen während der Alkalibehandlung, wobei der Gehalt des Zellstoffs beim Alkalibehandlungsschritt über 20 Gewichtsprozent, jedoch unter 75 Gewichtsprozent, liegt.

2. Verfahren nach Anspruch 1, wobei der Gehalt des Zellstoffs beim Alkalibehandlungsschritt zwischen 30 und 50 Gewichtsprozent und am bevorzugtesten zwischen 35 und 45 Gewichtsprozent liegt.

3. Verfahren nach Anspruch 1 oder 2, wobei Monochloressigsäure (MCA) oder eines ihrer Alkalisalze, bevorzugt Natriummonochloressigsäure (NaMCA), als Veretherungsreagenz verwendet wird und wobei das Veretherungsreagenz als Feststoff oder gelöst in Wasser oder einem Alkohol oder Gemischen davon hinzugefügt wird.

4. Verfahren nach Anspruch 3, wobei das Veretherungsmittel vor oder gleichzeitig mit dem festen Natriumhydroxid hinzugefügt wird.

5. Verfahren nach einem der vorstehenden Ansprüche, wobei die Reaktionstemperatur beim Veretherungsschritt 60 bis 120 °C, bevorzugt 90 bis 100 °C beträgt.

6. Verfahren nach einem der vorstehenden Ansprüche, wobei das Gemisch Zerkleinern, Scheren oder anderem mechanischem Mischen während der Veretherung ausgesetzt ist.

7. Verfahren nach einem der vorstehenden Ansprüche, wobei das Reaktionsmedium keine organischen Lösungsmittel bei den Alkalibehandlungs- und Veretherungsschritten enthält.

8. Verfahren nach einem der vorstehenden Ansprüche, wobei auf den Alkalibehandlungsschritt ein Konzentrationsschritt zur weiteren Erhöhung des Feststoffgehalts nach dem Alkalibehandlungsschritt auf einen Feststoffgehalt von 35 bis 80 Gewichtsprozent, bevorzugt 40 bis 70 Gewichtsprozent und noch bevorzugter zwischen 50 und 60 Gewichtsprozent vor oder nach dem Hinzufügen des Veretherungsreagenz folgt.

9. Verfahren nach Anspruch 1, wobei der nie getrocknete Zellstoff chemischer Zellstoff, recycelte Fasern, Fasern landwirtschaftlichen Ursprungs wie Stroh, Bagasse usw., Material, das Zellulosepulpe enthält, ist.

10. Verfahren nach Anspruch 1, wobei der Durchmesser des NaOH-Granulat < 5 mm, bevorzugt < 2 mm und noch bevorzugter < 1 mm beträgt.

11. Verfahren nach einem der Ansprüche 1 bis 4, wobei das carboxymethylierte Produkt mit Wasser (im Fall von DS < 0,3) oder Wasser/Alkohol-Lösungen (DS > 0,3), bevorzugt mit Methanol, Ethanol oder 2-Propanol-Wasserlösungen gewaschen wird, um Natriumchlorid und Natriumglucolat aus dem Produkt zu entfernen.

12. Verfahren nach einem der vorstehenden Ansprüche, das in einem Zellstoff-Fabrikprozess integriert ist, wobei der nie getrocknete Zellstoff aus dem Prozess ohne zwischengeschaltetes Trocknen oder Zellstofftrockenmahlung erhalten wird.

**13.** Verfahren nach Anspruch 12, wobei der Zellstoff aus dem Zellstoff-Fabrikprozess durch Filtration oder durch eine Schneckenpresse behandelt wird.

**Revendications**

**1.** Procédé pour la préparation d'éthers cellulosiques à partir de pâte humide, jamais desséchée à un contenu élevé en matières solides avec un processus qui comprend un traitement alcalin et une étape d'éthérification, en réalisant le traitement alcalin avec de l'hydroxyde de sodium (NaOH) granulé ou broyé solide (80-99,5 poids / % en poids) substantiellement sans utiliser aucun solvant organique, et travailler mécaniquement la matière continuellement ou à des intervalles de temps pendant le traitement alcalin dans lequel le contenu de la pâte à l'étape de traitement alcalin dépasse 20 poids / % en poids mais inférieur à 75 poids / % en poids.

**2.** Procédé selon la revendication 1, dans lequel le contenu de la pâte à l'étape de traitement alcalin se situe entre 30 et 50 poids / % en poids et plus préférablement entre 35 et 45 poids / % en poids.

**3.** Procédé selon la revendication 1 ou 2, dans lequel l'acide monochloroacétique (MCA) ou son sel alcalin, de préférence de l'acide monochloroacétique de sodium (NaMCA), est utilisé en tant que réactif d'éthérification et dans lequel le réactif d'éthérification est ajouté comme solide ou dissous dans soit de l'eau ou un alcool ou un mélange de ceux-ci.

**4.** Procédé selon la revendication 3, dans lequel l'agent d'éthérification est ajouté avant ou au même moment comme l'hydroxyde de sodium solide.

**5.** Procédé selon l'une quelconque des revendications précédentes, dans lequel la température de réaction à l'étape d'éthérification est de 60 à 120 °C, de préférence de 90 à 100 °C.

**6.** Procédé selon l'une quelconque des revendications précédentes, dans lequel le mélange est soumis au broyage, au cisaillement ou un autre mélange mécanique pendant l'éthérification.

**7.** Procédé selon l'une quelconque des revendications précédentes, dans lequel le milieu réactionnel ne contient pas de solvants organiques aux étapes de traitement alcalin et d'éthérification.

**8.** Procédé selon l'une quelconque des revendications précédentes, dans lequel l'étape de traitement alcalin est suivie par une étape de concentration pour accroître encore la teneur en matières solides après l'étape de traitement alcalin à une teneur en matières solides de 35 à 80 % en poids, de préférence de 40 à 70 % en poids et plus préférablement entre 50 et 60 % en poids, avant ou après l'addition du réactif d'éthérification.

**9.** Procédé selon la revendication 1, dans lequel la pâte jamais desséchée est de la pâte chimique, des fibres recyclées, des fibres de base agricole comme des pailles, de la bagasse etc. de la matière contenant de la pâte de cellulose.

**10.** Procédé selon la revendication 1, dans lequel le diamètre des granules NaOH est de < 5 mm, de préférence < 2 mm et plus préférablement < 1 mm.

**11.** Procédé selon l'une quelconque des revendications 1 à 4, dans lequel le produit carboxyméthylé est lavé à l'eau (en cas de DS < 0,3) ou avec des solutions eau/alcools (DS > 0,3), de préférence avec des solutions eau méthanol, éthanol ou 2-propanol pour retirer le chlorure de sodium et le glycolate de sodium du produit.

**12.** Procédé selon l'une quelconque des revendications précédentes, lequel est intégré avec un processus de fabrication de pâte, la pâte jamais desséchée étant obtenue à partir de ledit processus sans séchage intermédiaire ou broyage de pâte sèche.

**13.** Procédé selon la revendication 12, dans lequel la pâte issue dudit processus de fabrication de pâte est traitée par filtration ou par une presse à vis.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **SPINU et al.** *Cellulose,* 2011, vol. 18 (5), 247-256
- Extended mercerization prior to carboxymethyl cellulose preparation. **ALMLÖF H.** PhD thesis. Karlstad University, 2010
- Wood and Cellulosic Chemistry. **A. ISOGAI.** Chemical Modification of Cellulose. Marcel Dekker Inc, 2001, 599-625
- **D. KLEMM et al.** *Angew. Chem. Int. Ed.,* 2011, vol. 50, 5438-5466
- **OLARU, N. ; OLARU, L. et al.** Carboxymethylcellulose synthesis in organic media containing ethanol and/or acetone. *Journal of Applied Polymer Science,* 1998, vol. 67 (3), 481-486
- **OLARU, N. ; OLARU L.** Influence of Benzene-Containing Reaction Media on Cellulose Reactivity in the Carboxymethylation Prosess. *Ind. Eng. Chem. Res.,* 2004, vol. 43, 5057-5062
- **STIGSSON, V. ; KLOOW, G. et al.** The Influence of the solvent system used during manufacturing of CMC. *Cellulose,* 2006, vol. 13, 705-712
- **SPINU, M. ; DOS SANTOS, N. ; LE MOIGNE, N. ; NAVARAD, P.** How does the never-dried state influence the swelling and dissolution of cellulose fibres in aqueous solvent. *Cellulose,* 2011, vol. 18, 247-256
- **HONG T. L. ; BORRMEISTER B. ; DAUTZENBERG H. ; PHILLIPP B.** Zur Ermittlung des Sustituionsgrases lösicher Carboxymethylccellulose durch Polyelektrolyttitration. Zellst. *Und Pap.,* 1978, 207-210